Europäisches Patentamt

European Patent Office

Office européen des brevets

(19)

(11) Publication number: **0 077 097**
**B1**

(12) **EUROPEAN PATENT SPECIFICATION**

(45) Date of publication of patent specification: **28.05.86**

(21) Application number: **82201239.9**

(22) Date of filing: **05.10.82**

(51) Int. Cl.⁴: **B 23 H 1/00**

(54) **Apparatus for manufacturing toothed wheels by rolling-spark cutting.**

(30) Priority: **06.10.81 NL 8104543**

(43) Date of publication of application:
**20.04.83 Bulletin 83/16**

(45) Publication of the grant of the patent:
**28.05.86 Bulletin 86/22**

(84) Designated Contracting States:
**AT BE CH DE FR GB IT LI LU NL SE**

(56) References cited:
**FR-A-1 224 109**
**US-A-3 046 206**

(73) Proprietor: **KUIKEN N.V.**
**Randweg 31**
**NL-8304 AS Emmeloord (NL)**

(72) Inventor: **Kuiken, Hendrik**
**Min. Lelysingel 1**
**NL-8302 BR Emmeloord (NL)**
Inventor: **Van Strien, Adrianus Cornelis**
**Oeyenbos 7**
**NL-5511 PB Knegsel (NL)**
Inventor: **Cuypers, Martinus Hubertus**
**Ministerlaan 9**
**NL-5631 NA Eindhoven (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention is concerned with an apparatus for the manufacture of toothed wheels by spark cutting, whereby a toothed master wheel acting as electrode wheel is rolled over the surface of the workpiece to be toothed and functioning as other electrode and at every next passage the electrode wheel is sparking itself deeper into the workpiece controlled by a feed-device and whereby the resultant tooth forming is evenly performed over the total width of the tooth, comprising a spark generator, a frame with linear feed-device for the control of the electrode and the workpiece with respect to each other as a function of the set sparking power in relation to the momentary sparking power, a carrier for the workpiece movable with respect to the frame, a container surrounding at least the spark cutting area filled with insulating liquid (including a circulation-filter system) and insulating means between the electrode(s) and the workpiece including their respective carriers.

In FR—A—1,224,109 a machine of this type for the manufacture of toothed wheels by spark cutting is disclosed. Although the machines disclosed seem not to be designed for continuous operation until the machining operation is finished, its disclosure comes near to it. However, all geartrains and chain transmissions, each having numerous clearances and tolerances, are prohibitive to make very accurate wheels on it, especially when a rolling operation is used, with hundreds of cycles to sink the electrode wheel each cycle deeper into the workpiece. Furthermore the applied swinging arm carrying the electrode wheel with respect to the stationary workpiece is fundamentally unable to make wheels of the highest possible accuracy.

Since spark cutting generally takes rather much time and is especially suitable for machining otherwise unmachineable materials, like hardened steels, and/or special tooth-shapes, it will preferably be applied for making special and/or highly loadable wheels. In general this type of wheels must be made with high accuracy, also in order to reduce noise generation in service and to guarantee a relative long service life.

The French machine cannot answer these requirements. The aim of the invention is therefore to provide a machine of simple design with which the most accurate tooth-wheels can be made and finished in one operation starting from solid material.

The invention relates in first instance to a machine for the complete manufacture of toothing by rolling-spark cutting, with particular emphasis on those tooth profiles which cannot be manufactured with the well known mechanical cutting methods. Included are toothings made by pre-forging of which the mechanical finishing cannot be carried out by usual procedures like grinding or shaving.

Accordingly the invention is characterized in that the workpiece is fixedly attached to the feed-device and is coaxial with the direction of the feed motion in such a way that the workpiece exclusively performs the depth-feed of the spark cutting operation as function of the sparking power,

in that the toothed electrode wheel is attached rigidly to a shaft, which shaft is supported rotatably and without clearance on a turntable, which turntable is rotatably and without clearance supported coaxial with the feed motion with respect to and by the frame but fixed in the direction of the feed motion and is provided with rotational driving means,

in that concentric with the centerline of the workpiece respectively with the direction of the feed motion a circumferential toothed-control bush extending with its pitch circle in a plane perpendicular to the axis of rotation of the turntable is fixed to the frame, in which control bush a toothed follower-wheel meshes free of clearance, which follower-wheel is fixed on the shaft carrying the electrode wheel and serves as its driving wheel,

and in that the transmission ratio between the toothed control-bush and the follower wheel is the same as the ratio between the electrode wheel and the toothing to be made in the workpiece.

The machine described above includes in the first place the execution in which the axis of the pinion shaft with the electrode wheel and the workpiece intersect or cross each other perpendicularly so that in a side face of the workpiece a corresponding crown-wheel-like toothing is formed ("bent rack"), but it includes also executions in which the axes of rotation of both the electrode wheel and the workpiece intersect or cross each other at any angle between 0° and 90°. Off-center wheels and/or conical wheels thus can be made with the same accuracy.

It is furthermore possible with basically the above described machine to make the toothing as internal toothing in a hollow-shaped workpiece.

A complete toothing can be made by spark-cutting, without applying any pre-machining of the toothing. This is of particular importance when materials are applied which are not or only in a very wearisome way machinable with the known cutting methods, like hardened steels, ceramic materials and the like. More in particular, however, the machine according to the invention can be applied for the manufacture of toothed wheels with tooth-profiles which cannot be manufactured with the known methods based on mechanical cutting like shaving, hobbing, grinding, etc.

With the machine according to the invention a very high degree of accuracy can be obtained, especially when, as is known it itself, the ratio of the number of teeth of the electrode wheel to the number of teeth of the workpiece, does not form a whole number.

The invention makes use of known and renowned machines for spark cutting, whereby the feed device for the control of the electrode with regard to the workpiece takes place as function of the set spark power, compared to the momentary effective sparking power. Such an installation mainly consists of an adjustable spark generator, a frame with linear feed device for the control of the electrode with regard to the workpiece as a function of the set spark power relative to the momentary spark power, a carrier for the workpiece movable with respect to the frame, a container surrounding at least the spark cutting area filled with insulating liquid (including a circulation-filter system) and insulating means between the electrode(s) and the workpiece including their respective carriers.

Apparatus of this kind are made by several manufacturers, amongst whom Agie at Locarno, Switzerland.

In fact the invention is concerned with special tooling of this type of machines.

With said apparatus the whole depth or height of the teeth in the workpiece is made by spark cutting. The feed device takes care of this, correcting itself continuously, in order to maintain the desired spark gap at any given moment.

With the described apparatus the aimed purpose is attained, that is the use of a standard spark-erosion machine with an addition of a number of simple accessories, thanks to which without radical and expensive modifications or additional components, any given gear ratio can be easily made. For this purpose the toothed control bush, the follower pinion and the toothed electrode wheel are all easily replaceable, easily manufacturable and most of them even available with very narrow tolerances from the common trade.

The rotary movement of the turntable imposes its rotary movement around the workpiece to the follower pinion through the pinion shaft which is free of clearance rotatably supported by said turntable. In this way the desired very accurate rolling movement of the toothed electrode wheel over the workpiece is made possible.

According to a preferred embodiment the apparatus is further characterized in that the follower wheel and the electrode wheel having an involute normalized toothing, the control bush is constituted by an involute normalized toothed rack with small tooth width, so that it is manufacturable in one plane, although the rack is shaped as accurate circle. The earlier mentioned transmission ratio which may be chosen arbitrarily can thus be realized in a simple way.

Making use of involute normalized toothing is not new in itself. But its application for instance in angle- or bevel drives gives the enormous practical advantage that the outlining of the straight pinion wheel of the drive in axial sense is not critical and that furthermore no axial forces during operation are generated on the pinion shaft. Thus adjustment of the transmission in the gearcase is easier, the loading is less, all compared to the well-known and often dramatic problems with conical transmissions, which may be replaced by those according to the invention. Without problems they can be made up to the highest powers, speeds and largest sizes and with low noise generation. All materials are applicable, like hardened steels, and the like. Even in case the pinion shaft does not intersect with the centerline of the workpiece, in order to produce "off-center" transmissions, the basic advantages of involute toothing remain fully valid and the error introduced by still using standard involute toothing for the follower-wheel and the meshing toothed control-bush, will remain within fully acceptable limits for all requirements of highly accurate toothings (like profile, pitch, etc.).

Further it is preferable that the involute control bush and the meshing follower pinion have a module different from the electrode wheel, in particular a finer module. On account of both measures a higher accuracy is possible because a larger number of tooth faces of the follower pinion/control-bush combination give shape to the enveloping plane of the tooth faces to be cut in the workpiece.

Another preferred embodiment is characterized in that the plane in which the centerline of the shaft carrying both the electrode wheel and the follower wheel is circulating, is axially fixed in the direction of the centerline of the workpiece and of the axis of rotation of the turntable, by having the follower wheel support during its rotation free of clearance with its teeth face-on-face on the teeth of the control bush, for example urged by spring force or under its dead weight into mutual engagement. In spite of the fact that the control bush, in view of its very accurate involute toothing, can only have a small tooth width, the load on said toothing and consequently its wear is only small. Practically the only load on it is exercised by electromagnetic forces which act between the teeth of the electrode wheel and those of the workpiece. Since furthermore the effective radius of the control means generally is larger than the radius on which the machining takes place, on the one hand the strain is reduced whilst on the other hand the accuracy is increased proportionally.

Finally the rotational drive of the turntable can with advantage take place independently and not-synchronized with respect to the feed motion of the workpiece. This simplifies to a considerable extent the structural embodiment. By this separation a possible source of manufacturing inaccuracies is avoided.

In summarizing, the apparatus appears to be simple because the workpiece is stationary during the unrolling movement and is only controlled in a direction of the feed. The toothed electrode wheel performs the whole relative movement in absolute sense, but rotates meanwhile continuously along one and the same fixed track, perpendicular to and concentrical with the feed motion.

With the apparatus described above, it is possible among other things to manufacture toothings without run-out from the full material, also in hard materials. Such toothings have teeth of great strength and stiffness because they remain supported at one or both ends by the mother material. In order to use the full advantages of involute toothing, it is desirable to let run in such a crown wheel toothing involute pinions with a somewhat smaller tooth width than the tooth width of the electrode wheel in order to avoid problems with the axial alignment of the pinions.

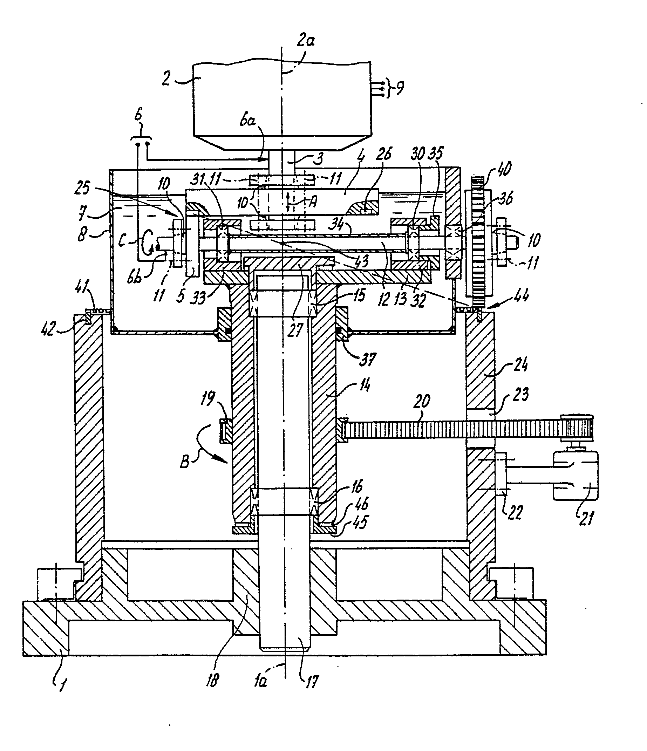

With the help of the following description of the Figure of a preferred embodiment of an unrolling-spark cutting machine for toothed wheels, the invention will be illustrated more in detail.

With reference 1 is indicated the upper side of a stable and rigid frame of a spark-cutting machine which is not further described in detail. To the frame is attached a stable machining head 2 which is neither described in detail. From the machining head 2 a stable rod 3 extends downwardly, being slidingly supported without clearance for axial movement to perform the feed motion during the machining operation. The rod 3 is locked against rotation and can move only in the direction of centerline 2a. The control of these movements takes place extremely accurate and fast, for example by means of a non-illustrated step-motor which controls a pre-loaded screw spindle. The workpiece 4 is attached clearance-free but removable to the feed rod 3. Schematically the linear feed motion is indicated by arrow A, which motion is given to the workpiece 4 by the feed device. With the toothed electrode wheel 5 its tooth profile is reproduced in the workpiece by spark-cutting. Between the teeth of the electrode wheel 5 and the material of the workpiece 4 at 25 the spark cutting takes place, one pole of a voltage source 6 being connected schematically with the workpiece 4 through a sliding contact 6a and the other pole with electrode wheel 5 through sliding contact 6b. It will be evident that via non-illustrated insulated connections the machining head 2 is connected with the frame 1. The spark cutting at 25 takes place in a dielectric liquid 7, contained in a vessel 8.

The workpiece 4 is fixed free of clearance but removable to the feed rod 3. For that purpose well known conical spanners 10 are applied, which secure the workpiece concentrically, clearance-free and rigidly to the rod by means of schematically illustrated tightening bolts 11. With the same type of spanner 10, 11 the electrode wheel 10 is secured concentrically, clearance-free and tight but removable and adjustable on the pinion-shaft 12, which in the illustrated example extends perpendicular with respect to the direction of the feed 2a, intersecting the latter. The pinion shaft 12 is supported by bearings 30 and 31 and bearing housings 32 and 33 clearance-free and rotatable on the turntable 13. Said turntable 13 consists of a stable generally flat plate, which is attached solidly to the end of a hollow turntable shaft 14. Through an upper and a lower bearing 15 respectively 16 the turntable shaft 14 is in a clearance-free way rigidly attached to an extension 17, which extension is rigidly fixed in a hub 18 forming part of the frame 1.

The centerline 1a of the shaft extension 17 and thus of the turntable shaft 14 and of the rotation of the turntable 13, is coaxial with the centerline 2a of the feed device and the feed motion A. Around the outside of the turntable shaft 14 a toothed wheel 19 is solidly attached for the rotational drive of the turntable. On this toothed wheel 19 runs a tooth-belt 20 which is driven by a schematically illustrated motor 21 which is attached with its mounting feet 22 to an extension 24 of the frame 1. The extension 24 is shaped as rigid hollow cylinder which is also placed concentric with the centerlines 1a and 2a. In the cylindrical extension 24 there is a passage 23 for the tooth-belt 20. Arrow B schematically indicates that the turntable with its turntable shaft can rotationally be driven without clearance in the bearings 15 and 16. The vessel or container 8 for the dielectric fluid revolves together with the turntable and is sealed with respect to the turntable shaft 14 by an O-ring 37.

Around the pinion shaft 12 a distance pipe 34 is fitted. The lefthand pinion shaft bearing 31 abuts with its lefthand side against a shoulder of the bearing housing 33. The righthand pinion shaft bearing 30 is urged to the left by a flange 35 with a certain pre-tension, so that the bearings 30 and 31 through the bush 34 provide for an axial and radial clearance-free lock-up of the pinion shaft 12. With the rotation of the turntable by its driving motor 21 the pinion shaft 12, supported on the turntable, rotates as well, so that the toothed electrode wheel 5 also joins the rotation of the turntable.

At the righthand end of the pinion shaft 12, outside the passage through a schematically shown seal 36 through the sidewall of the container 8, a toothed follower wheel or follower pinion 40 is attached in a similar clearance-free concentric rigid by removable way by means of conical spanners 10, 11. The follower pinion 40 also makes a revolving movement in a horizontal plane perpendicular to the centerlines 1a and 2a during rotation of the turntable. Simultaneously the toothing of the follower pinion meshes with a toothed control bush 44, which is inserted in a concentric circumferential groove 42 in the top end of the cylindrical extension 24. The control bush 44 may advantageously be manufactured as a straight toothed rack and is provided with an accurate normalized involute toothing. The toothed rack with comparatively small tooth width can easily be bent into a circular shape and be inserted in the groove 42 and provides in this way an accurate circular toothing 41 in which the follower pinion continuously meshes during its revolution around the centerline 1a.

The transmission ratio between the control bush 44 and the follower pinion 40 is the same as between the electrode wheel 5 and the toothing 25 to be made in the workpiece. It will be evident that the connecting line between the toothing 25 and the point of meshing of the follower pinion 40 in the control bush 44 intersects the centerlines 1a and 2a in a point 43 which is also the point of intersection between said centerlines and the centerline of the pinion shaft 12. In order to increase the accuracy the toothing of the follower pinion 40 and the control bush 44 may have a smaller module than the toothing 25 to be made. Further the diameter of the control bush 44 is larger than the diameter of the toothing 25 to be made in the workpiece 4. Because of this tolerances in the toothing of the follower pinion 40 and the control bush 44 are proportionally reduced.

It is advantageous to have the follower pinion 40 mesh with its teeth face-on-face with the teeth of the control bush 44 in order to avoid any clearance in the meshing toothings. For that purpose the support bearing 45 at the lower side of the turntable shaft 14 is attached in such a way that an intermediate axial bearing 46 remains unloaded or carries only part of the weight of the turntable with its accessories. For that purpose the ring 45 can be loaded by non-illustrated known means, like a spring or by hydraulic means, so that the follower pinion 40 meshes always free of clearance in the control bush 44.

With reference 9 it is schematically indicated that the machining head 2 controls the feed rod 3 from non-illustrated external control means, which control the feed A from instant to instant as function of the momentary spark-conditions. Not only a final feed to the full depth of the teeth is attained in this way, but the desired spark characteristics are continuously measured and readjusted.

Due to the attachment by means of tapered spanners 10, 11, a workpiece 4 can rapidly be placed on the feed rod 3 and be removed after completion. In the same way the electrode wheel 5 and the follower pinion 40 can be fitted and/or replaced by other wheels. The circular control bush 44, forming an independent part, can also easily be replaced. The toothing in the workpiece schematically indicated with 25 is illustrated at the lefthand side of the workpiece on its edge. It is, however, also possible to locate the toothing in the full material of the side face, as is indicated schematically with 26 on the righthand side of the workpiece. An extremely strong toothing can thus be made, because each tooth remains connected at both ends with the mother material.

It will be obvious that also bevel involute toothings can be made with the method and apparatus according to the invention and that it is not strictly necessary that the axes intersect each other with an angle of 90°. Even crossing is possible, while angles deviating from 90° between the pinion shaft with respect to the centerlines 1a and 2a are also possible.

**Claims**

1. Apparatus for the manufacture of toothed wheels by spark cutting, whereby a toothed master wheel (5) acting as electrode wheel is rolled over the surface of the workpiece (4) to be toothed and functioning as other electrode and at every next passage the electrode wheel is sparking itself deeper into the workpiece controlled by a feed-device and whereby the resultant tooth forming is evenly performed over the total width of the tooth, comprising a spark generator, a frame (1, 24) with linear feed-device (2, 3) for the control of the electrode and the workpiece with respect to each other as a function of the set sparking power in relation to the momentary sparking power, a carrier (10, 11) for the workpiece movable with respect to the frame, a container surrounding at least the spark cutting area filled with insulating liquid and insulating means between the electrode(s) and the workpiece including their respective carriers, characterized in that the workpiece (4) is fixedly attached to the feed-device (2, 3) and is coaxial with the direction (2a) of the feed motion (A) in such a way that the workpiece (4) exclusively performs the depth-feed of the spark cutting operation as function of the sparking power,

in that the toothed electrode wheel (5) is attached rigidly to a shaft (12), which shaft (12) is supported (30, 31) rotatably and without clearance on a turntable (13, 14), which turntable (13) is rotatably and without clearance supported coaxial with the feed motion (A) with respect to and by the frame (1, 18, 17) but fixed in the direction of the feed motion and is provided with rotational driving means (19—22),

in that concentric with the centerline of the workpiece (2a) respectively with the direction of the feed motion (A) a circumferential toothed-control bush (41, 44) extending with its pitch circle in a plane perpendicular to the axis of rotation of the turntable is fixed to the frame (1, 24), in which control bush (44) a toothed follower-wheel (40) (pinion) meshes free of clearance, which follower-wheel (40) is fixed on the shaft (12) carrying the electrode wheel (5) and serves as its driving wheel, and in that the transmission ratio between the toothed control-bush (44) and the follower wheel (40) is the same as the ratio between electrode wheel (5) and the toothing (25, 26) to be made in the workpiece (4).

2. Apparatus according to claim 1, characterized in that the follower wheel (40) and the electrode wheel (5) having an involute normalized toothing, the control bush (44) is constituted by an involute normalized toothed rack (41) with small tooth width, so that it is manufacturable in one plane, although the rack is shaped as accurate circle.

3. Apparatus according to claims 1 or 2, characterized in that the control bush (44) and the meshing follower wheel (40) have a module different from the electrode wheel (5), in particular a finer module.

4. Apparatus according to claim 1 and following, characterized in that the plane in which the centerline of the shaft (12) carrying both the electrode wheel (5) and the follower wheel (40) is circulating, is axially fixed in the direction of the centerline (2a) of the workpiece (4) and of the axis of rotation (1a) of the turntable (13), by having the follower wheel support during its rotation free of clearance with its teeth face-on-face on the teeth (41) of the control bush (44), for example urged by spring force or under its dead weight into mutual engagement.

5. Apparatus according to claims 1 and following, characterized in that the rotational drive (19—22) of the turntable (13, 14) is independent and may be not-synchronized with respect to the feed motion (A) of the workpiece.

## Patentansprüche

1. Vorrichtung zur Herstellung von Zahnrädern durch Funkenerosion, bei der ein Masterzahnrad (5), das als Elektrodenrad wirkt, auf der Oberfläche des mit der Verzahnung zu versehenden Werkstücks (4) abgewälzt wird, das als andere Elektrode wirkt, und bei dem bei jedem nächsten Durchgang des Elektrodenrad sich selbst tiefer in das Werkstück bei der Funkenerosion unter Steuerung durch eine Vorschubeinrichtung einschneidet, und bei der die erhaltene Zahnformung gleichförmig über der gesamten Breite des Zahnes durchgeführt wird, wobei ein Funkengenerator, ein Gestell (1, 24) mit einer linearen Vorschubeinrichtung (2, 3) zur Steuerung der Elektrode und des Werkstücks bezüglich einander als eine Funktion der eingestellten Funkenleistung bezüglich der momentanen Funkenleistung ein Träger (10, 11) für das Werkstück, der bezüglich des Gestells beweglich ist, ein Behälter, der wenigstens den Funkenerosionsbereich umgibt und mit einer isolierenden Flüssigkeit gefüllt ist, und eine Isoliereinrichtung zwischen der Elektrode bzw. den Elektroden und dem Werkstück einschließlich den zugeordneten Trägern vorgesehen sind, dadurch gekennzeichnet, daß das Werkstück (4) fest an der Vorschubeinrichtung (2, 3) angebracht ist und koaxial zu der Richtung (2a) der Vorschubbewegung (A) ist derart, daß das Werkstück (4) ausschließlich den Tiefenvorschub des Funkenerosionsvorganges als Funktion der Funkenleistung ausführt,

daß das gezahnte Elektrodenrad (5) starr an einer Welle (12) angebracht ist, wobei die Welle (12) drehbar (30, 31) und spielfrei auf einem Drehtisch (13, 14) gelagert ist, der drehbar und spielfrei koaxial mit der Vorschubbewegung (A) bezüglich des Gestells (1, 18, 70) und durch dieses gelagert ist, und wobei aber der Drehtisch in Richtung der Vorschubbewegung festgelegt ist, sowie mit einer Drehantriebseinrichtung (19—22) versehen ist,

daß konzentrisch mit der Mittellinie des Werkstücks (2a) bezugsweise zu der Richtung der Vorschubbewegung (A) eine Umfangs-Zahnsteuerbuchse (41, 44) vorgesehen ist, die sich mit ihrem Teilkreis in einer Ebene senkrecht zur Drehachse des Drehtisches erstreckt und fest mit dem Gestell (1, 24) verbunden ist, wobei die Steuerbuchse (44) mit einem Folge-Zahnrad (40) (Ritzel) spielfrei kämmt, das auf der Welle (12) festgelegt ist die das Elektrodenrad (5) trägt und das als sein Antriebsrad dient, und

daß der Übertragungsverhältnis zwischen der gezahnten Steuerbuchse (44) und dem Folge-Rad (40) dasselbe Verhältnis wie das Verhältnis zwischen dem Elektrodenrad (5) und der im Werkstück (4) herzustellenden Verzahnung (25, 26) ist.

2. Vorrichtung nach Anspruch 1, dadurch gekennzeichnet, daß das Folge-Zahnrad (40) und das Elektrodenrad (5) eine genormte Evolventenverzahnung haben, daß die Steuerbuchse (44) von einer mit genormten Evolventenverzahnung versehenen Zahnstange (41) mit einer kleinen Zahnbreite gebildet wird, so daß es in einer Ebene herstellbar ist, obgleich die Zahnstange als genauer Kreis geformt ist.

3. Vorrichtung nach Anspruch 1 oder 2, dadurch gekennzeichnet, daß die Steuerbuchse (44) und das kämmende Folge-Rad (40) einem vom Elektrodenrad (5) verschiedenen, insbesondere einen feineren, Modul haben.

4. Vorrichtung nach Anspruch 1 und den folgenden, dadurch gekennzeichnet, daß die Ebene, in der die Mittellinie der Welle (12), die sowohl das Elektrodenrad (5) als auch das Folge-Zahnrad (40) trägt, umläuft, axial in Richtung der Mittellinie (2a) des Werkstücks (4) und der Drehachse (1a) des Drehtisches (13) festgelegt ist, in dem das Folge-Zahnrad während seiner Drehung spielfrei mit seinen Zähnen Flanke auf Flanke auf den Zähnen (41) der Steuerbuchse (44), beispielsweise durch Andrücken Mittels Federkraft oder unter Eigengewicht, in wechselseitigem Eingriff gestützt ist.

5. Vorrichtung nach Anspruch 1 und den folgenden, dadurch gekennzeichnet, daß der Drehantrieb (19—22) des Drehtisches (13, 14) unabhängig ist und nicht synchron bezüglich der Vorschubbewegung (A) des Werkstücks sein kann.

## Revendications

1. Appareil pour fabriquer des roues dentées par étincelage, dans lequel une roue dentée maîtresse (5) agissant comme roue électrode roule tout autour de la surface de l'ébauche (4) à denter faisant fonction de deuxième électrode, la roue électrode s'étincelant plus profondément dans l'ébauche au cours des passages successifs, l'ébauche étant commandée par un dispositif d'avance, et dans lequel le formage de la dent en résultant est réalisé de façon homogène sur toute la largeur de la dent, comprenant un générateur d'étincelles, un bâti (1, 24) avec un dispositif d'avance linéaire (2, 3) pour la commande de l'électrode et de l'ébauche l'une par rapport à l'autre en fonction de la puissance d'étincelage affichée comparée à la puissance instantanée de l'étincelage, un support (10, 11) d'ébauche déplaceable par rapport au bâti, un récipient entourant au moins l'aire d'usinage par étincelage, rempli de liquide isolant, et des moyens d'isolement entre l'(es) électrode(s) et l'ébauche, y compris leurs supports respectifs, caractérisé en ce que l'ébauche (4) est attachée fixement au dispositif d'avance (2, 3) et est coaxiale à la direction d'avance (2a) du mouvement d'avance (A) de façon que l'ébauche (4) subisse exclusivement l'avance en profondeur de l'opération d'étincelage, en fonction de la puissance d'étincelage, en ce que la roue électrode dentée (5) est attachée rigidement à un arbre (12), qui est monté (30, 31) rotativement et sans jeu sur une table tournante (13, 14), montée rotativement et sans jeu coaxialement avec le mouvement d'avance (A) par rapport au bâti (1, 18, 17), mais fixée dans la direction du mouvement d'avance et munie de moyens d'entraînement tournants (19—22), en ce qu'une bague circonférentielle de commande dentée (41, 44), dont le cercle de denture est situé dans un plan perpendiculaire à l'axe de rotation de la table tournante, est fixée au bâti (1, 24) concentriquement à l'axe de l'ébauche (2a) et respectivement à la direction du mouvement d'avance (A) et engrène sans jeu avec une roue suiveuse dentée (pignon) (40) qui est fixée sur l'arbre (12) portant la roue électrode (5) et lui sert de roue de commande, et en ce que le rapport de transmission entre la bague de commande dentée (44) et la roue suiveuse (40) est le même que le rapport entre la roue électrode (5) et la denture (25, 26) à faire dans la pièce à usiner (4).

2. Appareil selon la revendication 1, caractérisé en ce que la roue suiveuse (40) et la roue électrode (5) ayant une denture normalisée en développante de cercle, la bague de commande (44) est constituée par une crémaillère (41) à denture normalisée à développante, avec faible largeur de dent, de sorte qu'on puisse la fabriquer dans un plan, bien que la crémaillère soit mise en forme d'un cercle de précision.

3. Appareil selon les revendications 1 ou 2, caractérisé en ce que la bague de commande (44) et la roue suiveuse (40) avec laquelle elle engrène, ont un module différent de celui de la roue électrode (5), en particulier un module plus fin.

4. Appareil suivant la revendication 1 et suivantes, caractérisé en ce que le plan dans lequel se déplace l'axe central de l'arbre (12) portant à la fois la roue électrode (5) et la roue suiveuse (40) est rendu fixe axialement dans la direction de l'axe central (2a) de la pièce à usiner (4) et de l'axe de rotation (1a) de la table tournante (13), en faisant en sorte que la roue suiveuse soit supportée pour tourner sans jeu, tandis que ses dents sont en contact face contre face avec les dents (41) de la bague de commande (44), sollicitée en contact mutuel par exemple par la force d'un ressort ou par son poids mort.

5. Appareil selon les revendications 1 et suivantes, caractérisé en ce que l'entraînement en rotation (19—22) de la table tournante (13, 14) est indépendant et peut ne pas être synchronisé avec le mouvement d'avance (A) de la pièce à usiner.

0 077 097

1